# EUROPEAN PATENT APPLICATION

(11) **EP 4 838 714 A1**
(43) Date of publication of application: **11.11.2026**
(21) Application number: 25175530.2
(22) Date of filing: 09.05.2025
(51) Int. Cl.: H01R 13/11, H01R 43/16, H01R 12/70, H01R 13/20

(54) **ELECTRIC CONNECTOR AND ELECTRIC CONNECTOR SYSTEM FOR A HIGHVOLTAGE APPLICATION IN A VEHICLE, ELECTRIC COUNTERPART, METHOD FOR PRODUCING AN ELECTRIC CONNECTOR, AND ELECTRIC COMPONENT**

(71) Applicant: Volvo Car Corporation, 405 31 Göteborg (SE)
(72) Inventor: FORSSELL, Jonas, 40531 Göteborg (SE); BJÖRKHOLTZ, Jonas, 40531 Göteborg (SE)
(74) Representative: Kransell & Wennborg KB

(57) **Abstract**

The disclosure relates to an electric connector (14) for a high-voltage application in a vehicle. The electric connector (14) comprises a first end (34), wherein the first end (34) comprises a plate-shaped portion (36) for electrically connecting the connector (14) to an electrical component (18). Moreover, the electric connector (14) comprises a second end (38), wherein the second end (38) comprises a clamping unit (40) with a first clamping arm (42) and a second clamping arm (44) for establishing a plug-in-connection with an electric counterpart (18) by receiving the electric counterpart (18) between the first clamping arm (42) and the second clamping arm (44). The connector (14) is integrally formed as a single piece. The disclosure further relates to the counterpart (18), an electric connector system (12), a method for producing the connector (14) and an electrical component (18) with the connector (14).

## Description

### TECHNICAL FIELD

The present disclosure relates to an electric connector for a high-voltage application in a vehicle.

Moreover, the present disclosure relates to an electric counterpart for establishing an electric connection with the connector.

In addition, the present disclosure relates to an electric connector system for a high-voltage application in a vehicle.

Furthermore, the present disclosure relates to a method for producing the electric connector.

The present disclosure further relates to an electric component.

### BACKGROUND

Electric high-voltage applications in vehicles are known as such. Very often, these high-voltage applications form part of an electric drivetrain of the vehicle. In this context, a battery pack may need to be connected to an inverter unit and/or an inverter unit may need to be connected to an electric machine for driving the vehicle. Furthermore, electric connections may be necessary within the battery pack, within the inverter unit and/or within the electric machine.

Electric connections in high-voltage applications need to be reliable. On the other hand, electric connections in high-voltage applications need to be as simple as possible in order to allow for efficient mass production. The reliability and the need for simplicity are at least partially conflicting objectives.

### SUMMARY

Consequently, it is an objective of the present disclosure to alleviate or solve the above-mentioned conflict of objectives.

The problem is at least partially solved or alleviated by the subject matter of the independent claims of the present disclosure, wherein further examples are incorporated in the dependent claims.

According to a first aspect, there is provided an electric connector for a high-voltage application in a vehicle. The connector comprises:
- a first end, wherein the first end comprises a plate-shaped portion for electrically connecting the connector to an electrical component; and
- a second end, wherein the second end comprises a clamping unit with a first clamping arm and a second clamping arm for establishing a plug-in-connection with an electric counterpart by receiving the electric counterpart between the first clamping arm and the second clamping arm;
wherein the connector is integrally formed as a single piece.

In the following, the terms "electric connector" and "connector" as well as "electric counterpart" and "counterpart" are used as synonyms. Moreover, a plate-shaped part or component is understood as a part or component that extends in three dimensions, wherein the extension in one of these three dimensions is very small, e.g. less than 30% or less than 20%, than the extension in the remaining two dimensions.

The core idea behind the present disclosure is to unite two functionalities into a single one-component connector, namely a fastening functionality and an electric coupling functionality. Traditionally, the aforementioned functionalities have to be provided by separate components rendering connectors known in the prior art costly and material-intensive to fabricate. In contrast, in the electric connector according to the first aspect, both functionalities are united in the clamping unit which is configured to establish a plug-in-connection to the counterpart by receiving the counterpart between the first clamping arm and the second clamping arm. In other words, the clamping unit is configured to connect both electrically and mechanically to the counterpart. Thus, the connector may be connected to the counterpart in a reliable manner. This is true from a mechanical perspective and from an electric perspective. Furthermore, this provides the advantage that the connector according to the first aspect can be produced in an efficient way. Moreover, the connector can be produced in high volumes in a cost-efficient manner rendering the connector in particular suitable for high-voltage applications in vehicles where a plurality of connectors is required. Moreover, the connector according to the first aspect is structurally simple.

Furthermore, the plate-shaped portion of the first end is in particular suitable for electrically connecting the connector to an electrical component. This is because the plate-shaped portion provides a comparatively large surface area through which high currents can be transported. Thus, the plate-shaped portion allows to transfer high currents resulting from high-voltages with high-efficiency. Moreover, the plate-shaped portion enables sufficient heat dissipation which reduces contact resistance. For example, the plate-shaped portion may be in a two-dimensional contact with other parts of the electrical component to which the connector pertains. Another advantage is that the flat surface of the plate-shaped portion provides a versatile mounting interface at which the electrical component can be mechanically and electrically coupled in an easy manner. For example, a part of the electrical component may be soldered to the plate-shaped portion.

Preferably, the plate-shaped portion may be L-shaped, U-shaped, S-shaped or I-shaped. This provides the advantage that the connector can be adapted to the geometry of the electrical component.

The plug-in-connection between the clamping unit and the electric counterpart provides a reliable and robust connection for coupling electrical components. In particular, the plug-in-connection allows that the connector and the counterpart may be assembled and disassembled multiple times. This provides the advantage that the electric connector can be disconnected from the electric counterpart in a simple manner which allows to repair and/or replace the connector and/or the counterpart. Moreover, the clamping unit with the first clamping arm and second clamping arm provides a cost- and material efficient way to provide a plug-in-connection. In addition, the use of the clamping unit allows to selectively contact the counterpart such that heat can be dissipated directly from the counterpart into the clamping unit. Hence, the heat transfer mechanism is improved. An improved heat transfer mechanism also diminishes the need to coat the connector with heat-conducting materials such as silver.

The clamping unit may be designated as a female connector part, whereas the counterpart may be configured to establish a plug-in-connection with the clamping unit as a male connector part.

The clamping unit may be configured to flexibly hold the counterpart in an assembled state of the plug-in-connection. In particular, the first clamping arm and the second clamping arm may be configured to be flexibly bent towards and away from each other. This flexible arrangement of the first clamping arm and the second clamping arm allows to receive and release the counterpart between the first clamping arm and the second clamping arm. This reduces the risk of breaking the first clamping arm and/or second clamping arm. According to an example, the portion of the counterpart which is received between the first clamping arm and the second clamping arm is thicker than a distance between the first clamping arm and the second clamping arm is before receiving this portion of the counterpart therebetween. Thus, when receiving the counterpart between the first clamping arm and the second clamping arm, the first clamping arm and the second clamping arm are moved away from one another, thereby creating an elastic reaction force such that both the first clamping arm and the second clamping arm push or press against the counterpart.

The first clamping arm and the second clamping arm may be structurally identical or different from each other, if taken alone. In particular, the first clamping arm and/or the second clamping arm may be rod-shaped, bar-shaped, hook-shaped or plate-shaped.

It is noted that the fact that the electric connector according to the first aspect is suitable for a high-voltage application in a vehicle does not exclude a suitability for other applications of the electric connector. The connector may for example also be suitable for being used in a wall box or charging infrastructure configured for charging an electric vehicle. Additionally or alternatively, the electric connector of the first aspect may be suitable for being used in a stationary battery system, e.g. used in connection with a set of solar panels or a wind turbine.

According to an example, the first clamping arm and the second clamping arm extend from a common base and define a recess for receiving the electric counterpart.

In other words, the first clamping arm and the second clamping arm together with the common base define a U-shaped cross-section or V-shaped cross-section. So to say, the common base resembles the bottom part and the first and the second clamping arm provide the legs of the letter U or V. This U-shaped or V-shaped cross-section provides an advantageous geometry in order to both mechanically and electrically connect the second end of the connector to the electric counterpart. In particular, the U-shaped cross-section prevents that the electric counterpart may slip out unintentionally from the recess which provides a reliable mechanically and electrically connection between the clamping unit and the electric counterpart.

According to an example, the first clamping arm and the second clamping arm define a middle plane there between, wherein the middle plane coincides or is parallel with a plane in which the plate-shaped portion extends.

Thus, the first clamping arm and the second clamping arm are arranged on opposite sides of the middle plane. Said plane in which the plate-shaped portion extends may be a plane in which the plate-shaped portion is arranged. Having the plane in which the plate-shaped portion extends and the middle plane coinciding or arranged in parallel is a space-saving design. Consequently, such a configuration is in particular suitable for high-voltage applications in vehicles in which a plurality of electric connectors are employed to connect, e.g., a plurality of terminals of a busbar to a battery cell pack. In other words, the fact that the electric connector is space-saving or compact facilitates the arrangement of a plurality of connectors in a restraint space.

The middle plane defined by the first clamping arm and the second clamping arm may be regarded as a mirror plane if the first clamping arm and the second clamping arm are structurally identical to each other.

According to an example, the first clamping arm comprises a set of clamping fingers which are arranged in a row. Additionally or alternatively, the second clamping arm comprises a set of clamping fingers which are arranged in a row.

The row of clamping fingers of the first clamping arm and/or second clamping arm provides the advantage that the respective clamping arm is configured to be flexible which allows to mechanically contact the electric counterpart in a reliable manner. This is due to the fact that the fingers may move independently from one another at least to a certain degree. Thus, reliable electric and mechanic connections are rendered possible also in cases in which the counterpart has an uneven surface or suffers from other defects. Furthermore, the row of clamping fingers of the first and/or second clamping arm is of further advantage because said row provides a plurality of contact portions for contacting the electric counterpart, wherein each contact portion is a contact between one of the clamping fingers and the electric counterpart. The plurality of contact portions may be arranged in a row as well. In particular, the row of contact portions provides an efficient transfer of current resulting from a high voltage between the connector and the counterpart. The row of contact fingers also allows to improve the heat transfer mechanism as the current directly flows from the electric counterpart to the contact fingers or vice versa.

Preferably, both the first clamping arm and the second clamping arm comprise a set of clamping fingers which are arranged in a row, respectively. The sets of clamping fingers may be structurally identical or different from each other. Preferably, the clamping fingers of a set of clamping fingers may be structurally identical to each other.

The number of clamping fingers of each set may depend on the high-voltage application in the vehicle. In other words, the clamping unit can be adapted to the high-voltage application use case by varying the number of contact fingers. In an example, each set of contact fingers may comprise 2 to 16 contact fingers. In an example in which current shall be directly transferred from an electric component to a busbar, each set of contact fingers may comprise 2 to 6 contact fingers, preferably, 3 to 4 contact fingers. For direct current collection from a battery cluster to an electric component, each set of contact fingers may comprise 8 to 16 contact fingers, preferably, 10 to 12 contact fingers. For alternating current transfer from an electric component to a busbar, each set of contact fingers may comprise 8 to 16 contact fingers, preferably, 10 to 12 contact fingers.

According to an example, at least some of the clamping fingers are separated by slits.

Separating the clamping fingers by slits fulfills two functions, namely, providing more flexible contact fingers and enabling an efficient heat transfer mechanism between the clamping fingers and the electric counterpart. Regarding the flexibility aspect, the slits enable that the contact fingers can be flexible bent towards and away from each other more freely. Moreover, bending towards or away from the counterpart is not hindered by neighboring contact fingers. Regarding the heat transfer mechanism aspect, the slits separate the contact fingers from each other such that each contact finger is free standing which allows an air cooling of the respective clamping fingers.

According to an example, each clamping arm comprises an insertion slope at a respective free end for facilitating the insertion of the electric counterpart between the clamping arms.

The insertion slope allows the electric counterpart to be slid along the insertion slope into the recess without putting too much tension on the respective free end of the clamping fingers. This facilitates the coupling of a connector to the counterpart.

According to an example, each clamping arm comprises a bead at a respective free end.

In this context, a bead is understood as a portion of increased size, thickness or cross-section. The bead serves as an electric contact portion to electrically connect the second end of the connector to the electric counterpart. This allows a direct current transfer from the electric counterpart to the second end of the electric connector via the camping fingers. Because of the bead, the heat generated at the contact portion may be distributed into the connector which reduces the heat at the contact portion. Furthermore, because each of the clamping fingers has a bead at a respective free end, the beads, i.e., the contact portions, are arranged along a contact line which is parallel to the middle plane between the clamping arms. As there are two clamping arms, there are also two contact lines, each contact line connecting one portion of the electric counterpart to one of the clamping arms. Hence, efficient current transfer is ensured.

In an example, a cross section of the bead may be wedge-shaped or rectangle-shaped. Alternatively, the bead may be shaped like a sphere or a part of a sphere.

According to an example, the connector is made of an aluminum material.

Traditionally, connectors are made of metals such as copper which are cost intensive to process and have a high carbon dioxide fingerprint. In contrast, the use of aluminum material is cost efficient and allows the use of various cost- and material production techniques as aluminum material can be easier processed than copper material. Moreover, aluminum material is in particular advantage because it is lightweight and therefore reduces the weight of an electrical connection. Thus, when applied in a vehicle, said vehicle equipped with an electrical connector made of aluminum material is also lightweight and therefore have higher range of motion when powered by a battery.

The term "aluminum material" means that the material may be made of pure aluminum or an alloy thereof.

According to an example, the connector comprises at least one portion which is coated with a passivation layer, the passivation layer comprising a metal selected from the group consisting of tin, nickel and combinations thereof. This means that the passivation layer comprises tin and/or nickel.

Because the connector allows heat to directly dissipate into the electric connector, it is not necessary to use highly heat-conducting coatings such as silver which are cost intensive. Instead, less cost-intensive coating materials such as nickel or tin can be used to reduce the contact resistance between the electric connector and the counterpart. Furthermore, the use of the passivation layer is in particular of advantage when using an aluminum material for producing the electric connector because aluminum is sensitive towards surface oxidation which is prevented by covering at least one portion of the electric connector with the above passivation layer. Preferably, the whole electric connector is coated with the passivation layer. Thus, the passivation layer also provides an anti-oxidation function.

In particular, the passivation layer may have a thickness of 1-25 µm, preferably 5-20 µm, more preferably 5 to 12 µm. The above thickness ranges resemble a good compromise between passivation, electrical resistance and production costs.

According to a second aspect, there is provided an electric counterpart for establishing an electric connection to the connector according to the first aspect, wherein the counterpart has a plate-shaped body. One side of the plate-shaped body is tapering.

The tapering of the body is of advantage because the counterpart can be easily introduced into the clamping unit of the connector according to the first aspect. Furthermore, the tapered plate-shaped body is easier to retract from the clamping unit such that the counterpart and the clamp unit can be assembled and disassembled multiple times. Altogether, using the counterpart, a reliable electric connection and a reliable mechanical connection may be established with the electric connector according to the first aspect. As has been mentioned before, the portion of the counterpart which is received between the first clamping arm and the second clamping arm may be thicker than a distance between the first clamping arm and the second clamping arm before receiving this portion of the counterpart therebetween. Thus, when receiving the counterpart between the first clamping arm and the second clamping arm, the first clamping arm and the second clamping arm are moved away from one another, thereby creating an elastic reaction force such that both the first clamping arm and the second clamping arm push or press against the counterpart.

According to a third aspect, there is provided an electric connector system for a high-voltage application in a vehicle. The electric connector system comprises the connector according to the first aspect and the counterpart according to the second aspect. The counterpart is clamped between the first clamping arm and the second clamping arm.

Using the connector system, a reliable electric connection and a reliable mechanical connection may be established. The above electric connector system provides the advantage that the connector and the counterpart are connected in a reversible manner via a plug-in-connection which can be assembled and disassembled multiple times along a common assembly direction. This allows to exchange the electrical components connected by the electric connector system in a fast and technically simple manner. Moreover, this reduces the complexity of an electric system in which the electric connector system is used. Furthermore, the electric connector system can also be used in high volumes in a vehicle as the electric connector can be easily produced in high volumes in a cost and material efficient manner. Additionally, the electric connection system allows an improved heat transfer mechanism between the counterpart and the connector, thereby improving the energy transfer.

According to a fourth aspect, there is provided a method for producing the electric connector according to the first aspect. The method comprises:
extruding an elongated profile having a first portion forming the plate-shaped portion of the first end of the connector and a second portion forming the clamping unit of the second end of the connector, wherein the first portion and the second portion are arranged adjacent to one another or at a distance from one another if regarded along an extrusion direction.

The use of an extrusion technique for manufacturing the connector is in particular of advantage because it allows to produce the connector in a high volume in a cost and material efficient manner. Moreover, it allows to fabricate the connector with the first and second end in one single piece. Thus, no additional steps of attaching or joining the first and the second ends together, for example, by using a welding or a gluing step, are necessary which reduces the complexity of production. Furthermore, extruding the first portion and second portion associated with the first and second ends of the connector along an extrusion direction in an elongated profile reduces the waste of material as both portions are arranged in the same profile.

According to an example, the method further comprises: separating the portions forming the connector from remaining portions of the elongated profile.

After extruding the elongated profile in a first step, the portions forming the connector can be obtained by simply separating the portions forming the connector from the remaining portions of the elongated profile. Separating the portions can be realized by cutting or stamping the respective portions from the elongated profile. This can be done for example by using a stamping tool, a laser or a water cutter. Preferably, there can be more than one connector arranged in the same elongated profile. More preferably, there are a plurality of connectors arranged in one elongated profile. This reduces the production cost and the waste produced by separating the portions forming the connector from the remaining portions of the elongated profile.

According to an example, the method further comprises: coating at least one portion of the connector with the passivation layer, the passivation layer comprising a metal selected from the group consisting of tin, nickel and combinations thereof.

Coating of the connector can be done by employing various techniques, for example, spray coating, dip coating or physical vapor deposition. The aforementioned deposition techniques allow to fabricate the connector coated with the passivation layer in high volumes in a simple and efficient manner.

According to an example, the method further comprises: forming a set of contact fingers by generating a number of slits in the first clamping arm and/or in the second clamping arm.

Forming a set of slits between the clamping fingers can be done by cutting the slits into the first clamping arm and/or the second clamping arm. Cutting the slits can be achieved by using a laser or a cutting blade.

According to a fifth aspect, there is provided an electrical component, the electrical component comprising at least one connector according to the first aspect and a printed circuit board. The printed circuit board is electrically connected to the plate-shaped portion of the connector.

In particular, the plate-shaped portion is soldered to the printed circuit board. In particular, the plate-shaped portion of the first end is in a two-dimensional contact with the printed circuit board which allows for an efficient heat transfer and electrical current transfer between the connector and the electrical component.

In particular, the connector is arranged on the printed circuit board such that the clamping unit protrudes from the printed circuit board. This provides a very space-efficient arrangement of connector and printed circuit board.

In particular, the electrical component may be configured to control an operation of a battery cluster such that a DC output of the battery cluster is converted into AC current to control an electric motor through by components of the printed circuit board. In this context, the printed circuit board may be electrically connected to a plurality of connectors. For example, the electrical component may comprise six connectors. Such an electrical component may be denoted as cell level inverter unit. Furthermore, the cell level inverter unit may also be configured to provide isolated DC outputs from the battery pack which can be used for auxiliary loads such as onboard lights, infotainment and suchlike. Optionally, the printed circuit board comprises one or more DC-DC converters such that a DC output may be provided at a voltage different from the DC input.

In particular, each battery cell level inverter unit may comprise a pair of electric connectors serving as a DC-terminal for collecting DC current from a battery cluster, a pair of electric connectors serving as AC terminals for providing AC current for propulsion and two additional connectors serving as micro-DC terminals which are isolated DC outputs for auxiliary loads present on the vehicle.

It should be noted that the above examples may be combined with each other irrespective of the aspect involved. Accordingly, the method may be combined with structural features and, likewise, the connector, the counterpart and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a cross-sectional view of a battery cell pack having an electric connector system according to the present disclosure, wherein the electric connector system comprises an electric connector and an electric counterpart according to the present disclosure;
- Figure 2: shows a detail view II of the electric connector system from Fig. 1 in a perspective view;
- Figure 3: shows a perspective view of the electric connector system from Fig. 2 without the periphery of the battery system;
- Figure 4: shows a perspective view of the electric counterpart of Figures 1 and 2;
- Figure 5: shows a perspective view of four different embodiments of the electric connector of Figures 1 and 2;
- Figure 6: shows a perspective view of an electric component according to the present disclosure, wherein the electric component comprises the four electric connectors of Fig. 5; and
- Figure 7: shows a flow diagram illustrating a method for producing the electric connector according to the present disclosure.

### DETAILED DESCRIPTION

The Figures are merely schematic representations and serve only to illustrate examples of the disclosure. Identical or equivalent elements are in principle provided with the same reference signs.

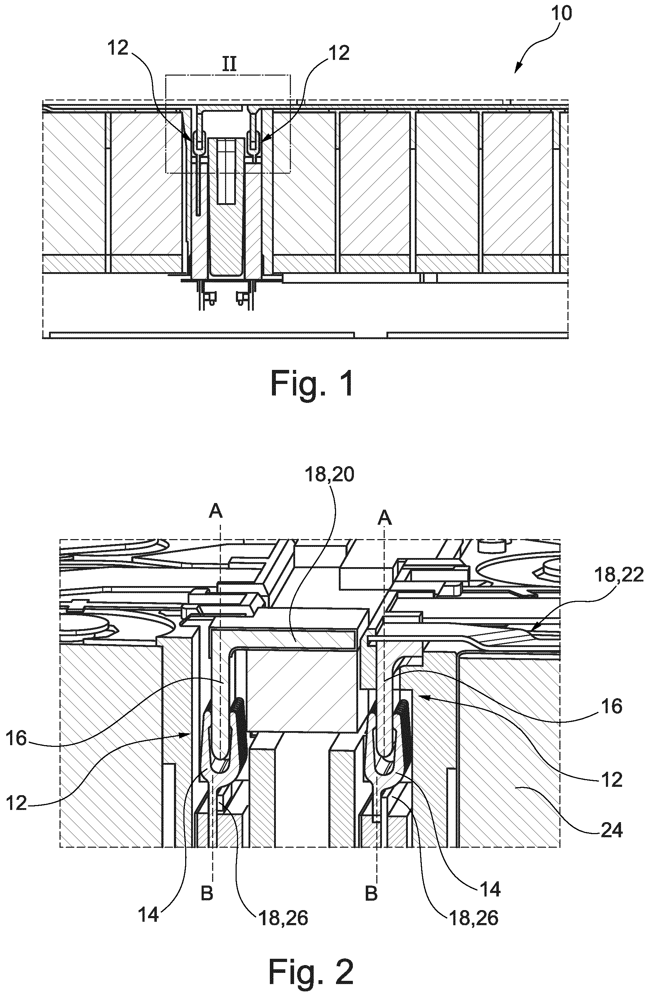

Figure 1 partially shows a battery cell pack 10, wherein the battery cell pack 10 is configured to provide electric energy for propulsion of an electric vehicle (not shown). The battery cell pack 10 comprises at least one electric connector system 12 connecting a battery cell cluster 22 to a printed circuit board 26 as will be explained in more detail in the following and at least one electric connector system 12 connecting the printed circuit board 26 to a busbar 20 as will also be explained in more detail in the following.

Each electric connector system 12 comprises an electric connector 14 and an electric counterpart 16 which together form a plug-in-connection in an assembled state.

Both the connector 14 and the counterpart 16 are configured to electrically connect different electrical components 18 of the battery cell pack 10 with each other. Therefore, both the connector 14 and the counterpart 16 are suitable for high-voltage applications.

In the example shown best in Fig. 2, the counterpart 16 on the left is electrically connected to a busbar 20, whereas the counterpart 16 on the right is electrically connected to a battery cell cluster 22. The battery cell cluster 22 comprises a number of battery cells 24 which are electrically coupled to provide a DC output. In both electric connector systems 12, the connectors 14 are electrically coupled to a printed circuit board 26. In other words, the electric connector systems 12 couple the printed circuit board 26 with the busbar 20 and the printed circuit board 26 with the battery cell pack 22, respectively.

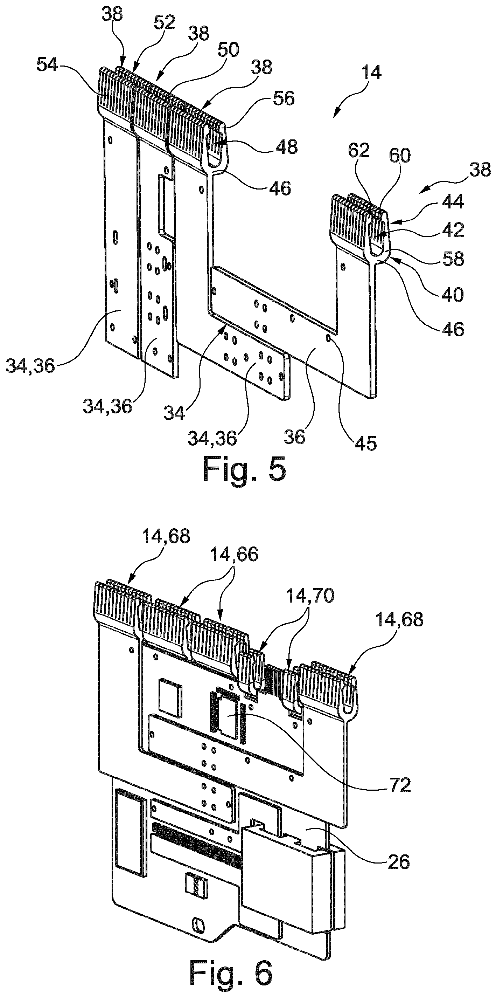

The embodiment referring to the printed circuit board 26 is described further below with reference to Fig. 6.

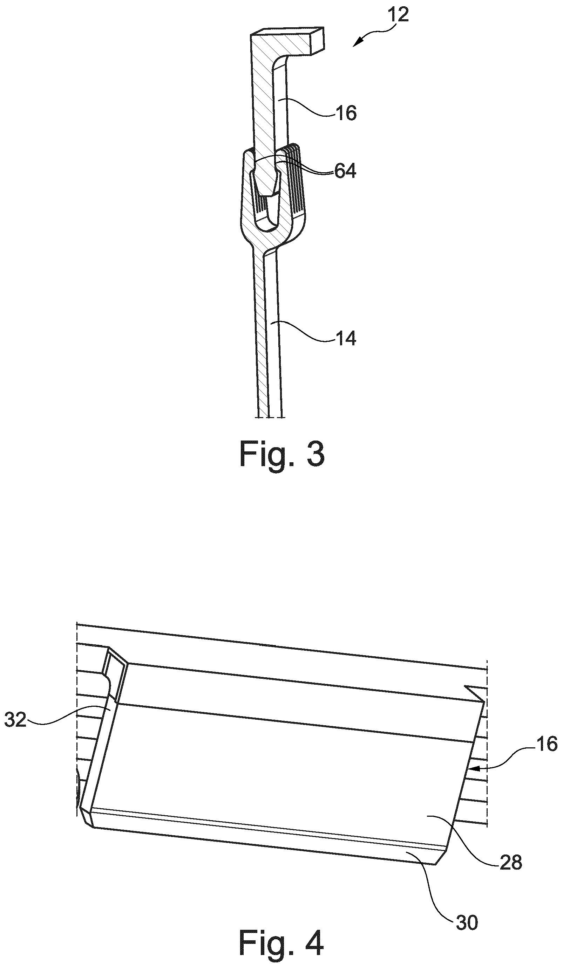

As shown in Fig. 3, the connector 14 acts as a female part and the electric counterpart 16 acts as a male part to establish an electrical connection with each other.

In the following, the counterpart 16 is described in more detail with reference to Fig. 4.

In detail, Fig. 4 shows a detailed view of the counterpart 16, wherein the counterpart 16 has a plate-shaped body 28 made from electrically conductive material. The plate-shaped body 28 has a first side 30 and a second side 32, wherein the first side 30 and the second side 32 are arranged opposite to each other.

In more detail, the first side 30 is tapering for facilitating the plug-in-connection with the connector 14.

For example, a portion of the first side 30 may be wedge-shaped. Moreover, the first side 30 may have a free end with the shape of a truncated pyramid.

In particular, the plate-shaped body 28 may be shaped like a flat cuboid with a longitudinal axis and a transverse axis.

The first side 30 may extend along the longitudinal axis of the plate-shaped body 28. For example, the first side 30 may have a length sufficient to be electrically connected to at least two electrical connectors 14. The counterpart 16 may serve in this example as an electric bridge to electrically connect two connectors 14 with each other.

In particular, the first side 30 may be arranged in a plane in which the plate-shaped body 28 extends.

The second side 32 may have a geometry for mounting the electric counterpart 16 to the electric component 18. As can be seen in the embodiment of the electric counterpart 16 shown in Fig. 3, a protrusion may be provided on the second side 32 such that the counterpart 16 has a L-shaped cross section.

Preferably, the counterpart 16 may form part of the electrical component 18. More preferably, the counterpart 16 may form part of the busbar 20. Even more preferably, the counterpart 16 is the busbar 20.

Additionally, the counterpart 16 may be designated as a male connector part.

Next, the connector 14 is described in more detail with reference to Fig. 5.

Fig. 5 shows four different embodiments of the connector 14 which are elucidated in the following.

The connector 14 comprises a first end 34, wherein the first end 34 comprises a plate-shaped portion 36 for electrically connecting the connector 14 to the electrical component 18.

Additionally, the connector 14 comprises a second end 38, wherein the second end 38 comprises a clamping unit 40 with a first clamping arm 42 and a second clamping arm 44 for establishing the plug-in-connection with the counterpart 16 by receiving the counterpart 16 between the first clamping arm 42 and the second clamping arm 44.

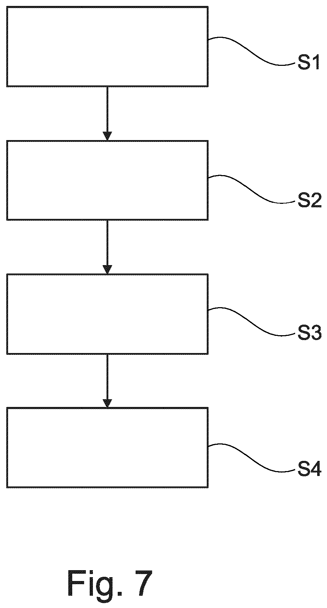

The connector 14 is formed as a single piece. This means that the first end 34 and the second end 38 are formed integrally as portions of a single piece. In other words, the first end 34 and the second 38 are not produced as separate pieces and subsequently attached to each other, for example, by welding or gluing. Preferably, the connector 14 is extruded as a single piece. The method for producing the connector 14 is described in more detail further below with reference to Fig. 7.

It should be noted that the connector 14 may be designated as a female connector part.

As can be seen from Fig. 5, the first end 34 and the second end 38 are arranged opposite each other. This means that the clamping unit 40 and the plate-shaped portion 36 are pointing in opposite directions.

In the following, the first end 34 is described in more detail.

As can be seen from the four different embodiments of the connector 14 shown in Fig. 5, the plate-shaped portion 36 may vary in shape. For example, the plate-shaped portion 36 may be L-shaped as depicted by the two connectors on the right side of Fig. 6, or I-shaped as depicted by the two connectors 14 on the left side of Fig. 6. However, the plate-shaped portion 36 may also be S-shaped or U-shaped (not shown).

Furthermore, the plate-shaped portion 36 may also comprise one or more through holes 45 for connecting the plate-shaped portion 36 mechanically to the remaining parts of the electrical component 18.

In the following, the second end 38, in particular, the clamping unit 40, is described in more detail.

The clamping unit 40 comprises the first clamping arm 42 and the second clamping arm 44, wherein both the first clamping arm 42 and the second clamping arm 44 extend from a common base 46 to define a recess 48 for receiving the counterpart 16.

When seen in direction perpendicular to a plane in which the first and second clamping arms extends, the clamping unit 40 is U-shaped.

As can be seen from Fig. 5, the common base 46 is connected to the plate-shaped portion 36 of the first end 34.

With reference to Fig. 2, the first clamping arm 42 and the second clamping arm 44 define a middle plane A there between, wherein the middle plane A is parallel with a plane B in which the plate-shaped portion 36 extends. This can be achieved by the plate-shaped portion 36 being arranged in a position which is laterally shifted with respect to a centered position of the common base 46. Alternatively, the first clamping arm 42 and the second clamping arm 44 define a middle plane A there between, wherein the middle plane A coincides with a plane B in which the plate-shaped portion 36 extends (not shown). This can be achieved by the plate-shaped portion 36 being arranged in a centered position relative to the common base 46.

Next, the clamping arms 42, 44 are described in more detail with reference to Fig. 5.

The first clamping arm 42 comprises a set of clamping fingers 50 which are arranged in a row 52 and/or the second clamping arm 44 comprises a set of clamping fingers 50 which are arranged in a row 52.

Preferably, each of the first clamping arm 42 and the second clamping arm 44 comprises a set of clamping fingers 50 arranged in row 52. More preferably, the middle plane A may be a mirror plane if the first clamping arm 42 and the second clamping arm 44 are structurally identical.

Furthermore, at least some of the clamping fingers 50 are separated by slits 54. Preferably, each clamping finger 50 is separated towards the neighboring clamping fingers 50 by slits 54.

The slits 54 penetrate the respective clamping arm 42, 44 such that the clamping fingers 50 are free-standing.

In the following, the clamping fingers 50 are discussed in more detail with reference to Fig. 5.

Each clamping finger 50 has a free end 56 and a body portion 58, the body portion 58 connecting the free end 56 to the common base 46.

The body portion 58 may be rod-shaped, bar-shaped or plate-shaped.

The body portion 58 may be configured to be flexible such that the clamping finger 50 may be bent towards or away from the middle plane A.

Each clamping finger 50 has an insertion slope 60 at the respective free 56 for facilitating the insertion of the electric counterpart 16 between the clamping arms 42, 44. In particular, the insertion slope 60 increases in the direction towards the common base 46.

Each clamping finger 50 comprises a bead 62 at the respective free end 56. The bead 62 have a wedge-shaped cross section as shown in Fig 4.

The bead 62 has a contact portion 64 for electrically contacting the counterpart 16 in an assembled state. This contact portion 64 is best shown in Figs. 2 and 3. For example, the contact portion 64 may be a side surface of the bead 62.

In particular, the electric connector 14 is made of an aluminum material. For example, the connector may be made of aluminum or an alloy thereof. The same applies to the electric counterpart 16.

Furthermore, the connector 14 comprises at least one portion which is coated with a passivation layer (not shown), the passivation layer comprising a metal selected from the group consisting of tin, nickel and combinations thereof. The same applies to the electric counterpart 16.

The passivation layer has a thickness of 1-25 µm, preferably to 5-20 µm, more preferably to 5 to 12 µm.

It is noted that even though Figures 4 and 5 show a total of four connectors 14, some of the reference signs are only provided for some of these four connectors 14 for the purpose of clear representation.

In the following, the working principle of the electric connector system 12 is explained in more detail. As it can be seen in Figs. 1 and 2, the electric connector system 12 is configured to be a plug-in-connection, whereas the connector 14 acts as a female part and the electric counterpart 16 acts as a male part to establish an electrical connection with each other. The electric counterpart 16 is received between the first clamping arm 42 and the second clamping arm 44 such that the first clamping arm 42 and the second clamping arm 44 electrically contact the electric counterpart 16 via the contact portions 64. The electrical contact portions 64 are best shown in Fig. 2. Because of the use of a plug-in-connection, the electrical connector system 12 may be assembled and disassembled multiple times. This allows to exchange and repair the electrical components 18 which are electrically connected with each other via the electric connector system 12.

In the following, the electrical component 18 according to the disclosure is described in detail with reference to Fig. 6.

The electrical component 18 comprises six electric connectors 14 and the printed circuit board 26. The printed circuit board 26 is electrically connected to each of the plate-shaped portions 36 of the six electric connectors 14. The printed circuit board 26 may be soldered to each of the electric connectors 14.

In particular, the electrical component 18 may be a cell level inverter unit.

The cell level inverter unit may be configured to control an operation of a battery cluster (not shown) such that DC output from the battery cluster is converted into AC current to control an electric motor. Furthermore, the cell level inverter unit may also be configured to provide isolated DC output from the battery cluster which can be used for auxiliary loads such as onboard lights, infotainment and suchlike.

In particular, the battery cell level inverter unit may comprise a pair of electric connectors 14 serving as a DC-terminals 66 for collecting DC current from the battery cluster, a pair of electric connectors 14 serving as AC terminals 68 for providing AC current for propulsion and two additional connectors 14 serving as micro DC terminals 70 which are isolated DC outputs for auxiliary loads present on the vehicle.

In order to control the operation of a battery cluster, the cell level inverter unit may comprise a controller 72. The controller 72 may be connected to a battery management system, BMS (not shown), which is configured to control the operation of a plurality of cell level inverter units in the battery cell pack 10.

In the following, the method for producing the electric connector 40 is described in more detail with reference to Fig. 7.

The method comprises a step S1 of extruding an elongated profile having a first portion forming the plate-shaped portion 36 of the first end 34 of the connector 14 and the second portion forming the clamping unit 40 of the second end 38 of the connector 14, wherein the first portion 34 and the second portion 38 are arranged adjacent to one another or at a distance from one another if regarded along an extrusion direction.

Preferably, the elongated profile may comprise more than one of the first and second portions forming the connector 14.

The method further comprises a step S2 of separating the portions forming the connector 14 from the remaining portions of the elongated profile.

For example, the portions may be separated by cutting or stamping the connector 14 from the remaining portions of the elongated profile.

When looking at Figure 4 and the four connectors 14 represented therein, it may be imagined that these four connectors 14 have been cut out from a common extruded elongated profile.

Subsequently, the method comprises a step S3 of forming a set of clamping fingers 50 by generating a number of slits 54 in the first clamping arm 42 and/or the second clamping arm 44.

The method further comprises a step S4 of coating at least one portion of the connector 14 with a passivation layer.

The step S4 may be carried out using a physical vapor deposition, spray coating or dip coating.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: battery cell pack
- 12: electric connector system
- 14: connector
- 16: counterpart
- 18: electrical component
- 20: busbar
- 22: battery cell cluster
- 24: battery cells
- 26: printed circuit board
- 28: plate-shaped body
- 30: first side
- 32: second side
- 34: first end
- 36: plate-shaped portion
- 38: second end
- 40: clamping unit
- 42: first clamping arm
- 44: second clamping arm
- 45: through hole
- 46: common base
- 48: recess
- 50: clamping fingers
- 52: row
- 54: slits
- 56: free end
- 58: body portion
- 60: insertion slope
- 62: bead
- 64: contact portion
- 66: DC terminals
- 68: AC terminals
- 70: micro DC terminals
- 72: controller

- A: middle plane
- B: plane

## Claims

1. An electric connector (14) for a high-voltage application in a vehicle, the connector (14) comprising:
- a first end (34), wherein the first end (34) comprises a plate-shaped portion (36) for electrically connecting the connector (14) to an electrical component (18); and
- a second end (38), wherein the second end (38) comprises a clamping unit (40) with a first clamping arm (42) and a second clamping arm (44) for establishing a plug-in-connection with an electric counterpart (18) by receiving the electric counterpart (18) between the first clamping arm (42) and the second clamping arm (44);
wherein the connector (14) is integrally formed as a single piece.

2. The connector (14) according to claim 1, wherein the first clamping arm (42) and the second clamping arm (44) extend from a common base (56) and define a recess (48) for receiving the electric counterpart (18).

3. The connector (14) according to claim 1 or 2, wherein the first clamping arm (42) and the second clamping arm (44) define a middle plane (A) there between, wherein the middle plane (A) coincides with or is parallel to a plane (B) in which the plate-shaped portion (36) extends.

4. The connector (14) according to any one of the preceding claims, wherein the first clamping arm (42) comprises a set of clamping fingers (50) which are arranged in a row (52), and/or wherein the second clamping arm (44) comprises a set of clamping fingers (50) which are arranged in a row (52).

5. The connector (14) according to claim 4, wherein at least some of the clamping fingers (50) are separated by slits (54).

6. The connector (14) according to any one of the preceding claims, wherein each clamping arm (50) comprises an insertion slope (60) at a respective free end (56) for facilitating the insertion of the electric counterpart (18) between the clamping arms (42, 44).

7. The connector (14) according to any one of the preceding claims, wherein each clamping arm (42, 44) comprises a bead (62) at the respective free end (56).

8. The connector (14) according to any one of the preceding claims, wherein the connector (14) is made of an aluminum material.

9. The connector (14) according to any one of the preceding claims, wherein the connector (14) comprises at least one portion which is coated with a passivation layer, the passivation layer comprising a metal selected from the group consisting of tin, nickel and combinations thereof.

10. An electric counterpart (18) for establishing an electric connection with the connector (14) according to any one of the preceding claims, wherein the electric counterpart (18) has a plate-shaped body (28), and wherein one side (32) of the plate-shaped body (28) is tapering.

11. An electric connector system (12) for a high-voltage application in a vehicle, the connector system (12) comprising the connector (14) according to any one of claims 1 to 9 and the electric counterpart (18) according to claim 10, wherein the electric counterpart (18) is clamped between the first clamping arm (42) and the second clamping arm (44).

12. A method for producing the electric connector (14) according to any one of claims 1 to 9, wherein the method comprises:
extruding an elongated profile having a first portion forming the plate-shaped portion (36) of the first end (34) of the connector (14) and a second portion forming the clamping unit (40) of the second end (38) of the connector (14), wherein the first portion and the second portion are arranged adjacent to one another or at a distance from one another if regarded along an extrusion direction.

13. The method according to claim 12, further comprising: separating the portions forming the connector (14) from remaining portions of the elongated profile.

14. The method according to claim 12 or 13, wherein the method further comprises:
forming a set of contact fingers (50) by generating a number of slits (54) in the first clamping arm (42) and/or in the second clamping arm (44).

15. An electrical component (18), the electrical component (18) comprising at least one connector (14) according to any one of claims 1 to 9 and a printed circuit board (26), the printed circuit board (26) being electrically connected to the plate-shaped portion (36) of the connector (14).
